# FASCICULE DE BREVET EUROPEEN

(11) **EP 1 286 550 B1**
(45) Date de publication et mention de la délivrance du brevet: **10.01.2007**
(21) Numéro de dépôt: 02078365.0
(22) Date de dépôt: 14.08.2002
(51) Int. Cl.: H04N 7/50, G06F 15/163, G06F 13/40

(54) **Dispositif de traitement et d'acheminement de données**
Vorrichtung zur Verarbeitung und Leiten von Daten
Device for data processing and routing

(30) Priorité: 21.08.2001 FR 0110960
(43) Date de publication de la demande: 26.02.2003
(73) Titulaire: Koninklijke Philips Electronics N.V., 5621 BA Eindhoven (NL)
(72) Inventeur: Adelaide, Joseph, 75008 Paris (FR); Didier, Robin, 75008 Paris (FR)
(74) Mandataire: White, Andrew Gordon

(56) Documents cités:
- US-A- 4 807 116
- US-A- 5 084 871
- US-A- 5 557 538

## Description

### Domaine technique de l'invention

La présente invention concerne un dispositif de traitement de données comprenant un bus de données, une unité de routage apte à gérer des communications sur le bus de données, au moins une unité de traitement apte à émettre des données, au moins une unité de traitement apte à recevoir de données, et une mémoire locale apte à stocker temporairement des données.

L'invention concerne aussi une méthode de gestion de communications de données sur un bus de données. Elle trouve son application dans les appareils de traitement de données multimédia telles que les données MPEG (de l'anglais 'Moving Picture Expert Group') comme, par exemple, les appareils numériques de type récepteurs décodeurs de télévision (en anglais 'set-top-box'), aptes à effectuer des opérations de décodage et de transcodage.

### Etat de la technique antérieure

Dans les architectures de codage ou de décodage de données vidéo MPEG, différents schémas de communication ont été utilisés jusqu'à présent pour permettre le transfert des données vidéo entre différentes unités de traitement. Les unités de traitement comportent des coprocesseurs implémentant des fonctions telles que, par exemple, un décodage à longueur variable, une quantification inverse, ou une transformation en cosinus discrète inverse. Pour des données vidéo de type MPEG qui sont par nature de taille variable, l'architecture de communication de données la plus pertinente comporte des mémoires de type files d'attente ou FIFO (de l'anglais 'First In First Out'), un bus de données et une mémoire locale connectée au bus de données. Les données vidéo sont transmises d'un coprocesseur émetteur vers un coprocesseur récepteur via un bus de données sous la forme de paquets dont la taille dépend de la granularité des files d'attente. Cette transmission de paquets de données vidéo s'effectue en utilisant un mécanisme de dépilage - empilage (en anglais 'push-pop') consistant à dépiler les données vidéo paquet par paquet de la file d'attente associée au coprocesseur émetteur pour les stocker dans la mémoire locale, ces paquets étant empilés ultérieurement dans la file d'attente du coprocesseur récepteur à partir de la mémoire locale. Une telle architecture de communication est montrée dans le document de brevet US 5,557,538. Bien qu'une telle architecture de communication de données permette une certaine flexibilité de fonctionnement, elle est particulièrement coûteuse en terme de bande passante du fait des nombreux transferts de données sur le bus de données pour lesquels la communication s'effectue obligatoirement par la mémoire locale.

De façon alternative le document de brevet US 4,807,116 montre une méthode de communication entre processeurs reliés par un bus où un contrôleur du bus interroge le recepteur pour savoir sa disponibilité et commande l'émetteur de commencer la transmission en conséquence. Dans ce cas l'émetteur ne peut pas transmettre les données traitées et risque de surpasser la capacité de sa mémoire tampon interne.

### Exposé de l'invention

La présente invention a pour objet principal de proposer un dispositif de traitement de données selon la revendication 1 et une méthode de gestion de communications de données selon la revendication 4 qui soient moins coûteux en terme de bande passante.

A cet effet, ledit dispositif de traitement de données est remarquable en ce que l'unité de traitement réceptrice de données est apte à fournir un signal de disponibilité à l'unité de routage, et en ce que l'unité de routage est apte à autoriser le transfert des données émises par l'unité de traitement émettrice vers la mémoire locale ou vers l'unité de traitement réceptrice en fonction d'une valeur du signal de disponibilité.

Le dispositif de traitement de données selon l'invention transmet donc directement les données de l'unité de traitement émettrice vers l'unité de traitement réceptrice si la valeur du signal de disponibilité de ladite unité de traitement réceptrice l'autorise. Une telle possibilité permet ainsi de réduire la bande passante. Ledit dispositif de traitement de données présente également l'avantage d'avoir un faible temps de latence et de présenter un fonctionnement plus flexible que celui de l'état de la technique antérieure.

### Brève description des dessins

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés parmi lesquels :
- la Fig. 1 présente une architecture de traitement de données selon l'invention,
- la Fig. 2 illustre une communication des données entre une unité de traitement émettrice et une unité de traitement réceptrice,
- la Fig. 3 illustre la gestion par l'unité de routage d'un ensemble d'unités de traitement, et
- la Fig. 4 donne un exemple particulier d'un mode de réalisation de l'architecture de traitement de données dans le cas de données vidéo de type MPEG.

### Exposé détaillé d'au moins un mode de réalisation de l'invention

La présente invention concerne une architecture de traitement et d'acheminement de données comprenant une unité de routage chargée de gérer des communications entre une unité de traitement émettrice de données et une unité de traitement réceptrice de données, l'architecture de traitement de données comprenant différentes unités de traitement. L'architecture de traitement de données a été développée plus particulièrement pour la communication de données vidéo de type MPEG mais est applicable aux communications de tout type de données entre des unités de traitement via un bus de données géré par une unité de routage.

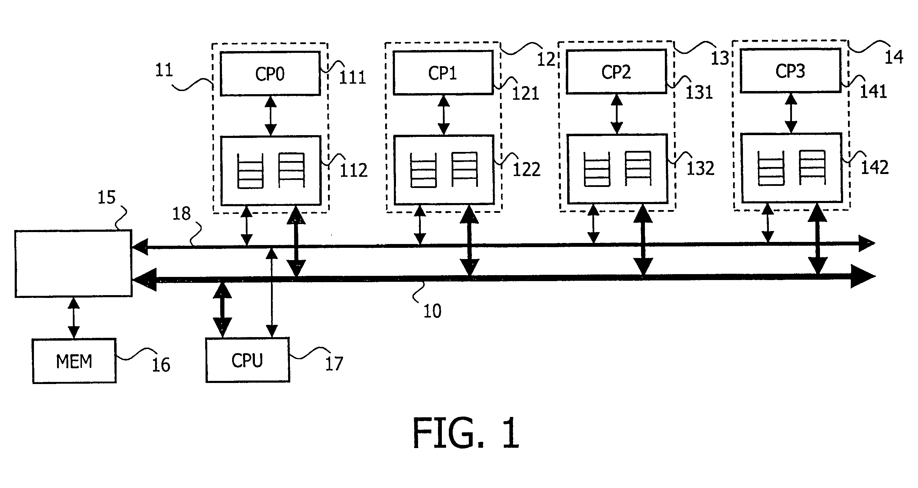

La Fig. 1 illustre une architecture de traitement de données selon l'invention. Ladite architecture comprend les éléments suivants :
- un bus de données (10) pour la circulation des données ;
- un bus de contrôle (18) pour la circulation des informations de contrôle ;
- un ensemble d'unités de traitement (11,12,13,14), à savoir au moins une unité de traitement apte à émettre des données (11) et au moins une unité de traitement apte à recevoir de données (12). Une unité de traitement comporte un coprocesseur CP0 (111), CP1 (121), CP2 (131) ou CP3 (141) associé à une interface de communication (112,122,132 ou 142). Ladite interface de communication est apte à stocker temporairement les données en provenance du coprocesseur en vue de leur mise en circulation sur le bus de données lors d'une émission de données ou à stocker les données en provenance du bus de données en vue de leur traitement par le coprocesseur lors d'une réception de données. L'interface de communication comporte ici deux mémoires de type files d'attente ou FIFO, une en émission et une en réception. Le coprocesseur implémente une fonction de traitement de données qui est dans le cas du traitement de données MPEG, un codage à longueur variable VLC, une quantification Q des données codées, ou une transformation en cosinus discrète DCT des données quantifiées pour ne citer que quelques exemples ;
- une unité de routage (15) apte à gérer des requêtes émanant des unités de traitement et à gérer l'acheminement des données sur le bus de données ;
- une mémoire locale (16) apte à stocker temporairement des données en provenance d'une unité de traitement émettrice (11). La mémoire locale est ici connectée directement à l'unité de routage. Elle peut également être connectée au bus de données si l'unité de routage reste maître de toutes les communications demandées par une unité de traitement émettrice vers une unité de traitement réceptrice ;
- une unité centrale de calcul CPU (17).

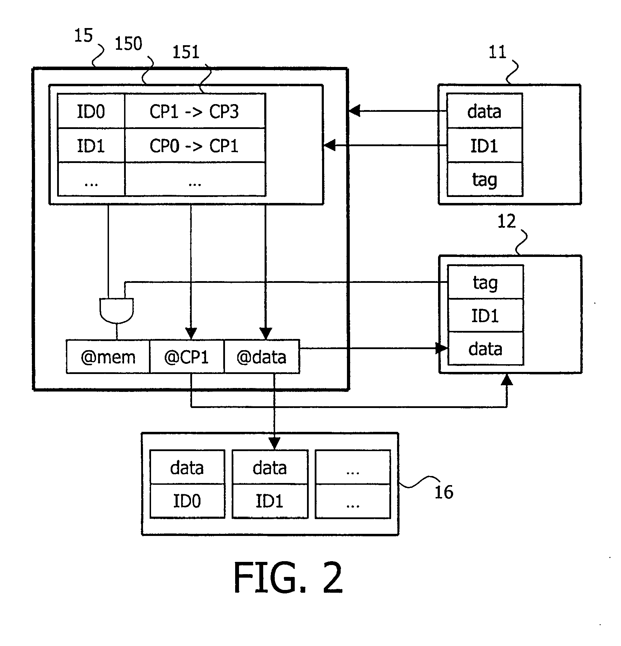

La Fig. 2 illustre plus particulièrement la façon dont les données sont communiquées entre deux unités de traitement par l'unité de routage.
Un coprocesseur d'une unité de traitement émettrice (11) de données charge les paquets de données qu'il vient de traiter dans une mémoire de l'interface de communication. Chaque paquet de données contient des données (data) et un identificateur (ID) qui caractérise le type de données à transférer à une unité de traitement réceptrice (12) de données. L'identificateur est transmis à l'unité de routage afin de déterminer l'unité de traitement réceptrice (12). Pour cela, ladite unité de routage comprend un circuit de contrôle (150) comportant lui-même une table de communication (151) qui contient la correspondance entre un identificateur (ID0,ID1,...) et un lien de communication (CP1 -> CP3, CP0 -> CP1,...), ceci pour tous les liens de communication définis entre les unités de traitement pour une fonctionnalité donnée. Pour implémenter cette table de communication, l'unité de routage comporte, par exemple, des registres de communication dédiés à chaque unité de traitement connectée à l'unité de routage par le bus de contrôle. Les registres de communication servent à transporter des descripteurs de données d'une unité de traitement émettrice vers une unité de traitement réceptrice. Un premier descripteur contient l'adresse des données traitées par l'unité de traitement émettrice (@data), l'adresse de l'unité de traitement réceptrice (@CP1) et identificateur (ID1). La transmission de l'adresse des données traitées par l'unité de traitement émettrice (@data) est nécessaire car la mémoire locale (16) peut contenir des paquets de données non encore transférés. Cette adresse permet à l'unité de routage de connaître la position du paquet de données à transférer vers l'adresse de l'unité de traitement réceptrice (@CP1).

L'unité de routage connaît ainsi l'unité de traitement réceptrice (12) de données à partir de l'identificateur (ID1) et de la table de communication (151). Ladite unité de routage va alors lire un registre de disponibilité (tag) de l'unité de traitement réceptrice de données indiquant si une mémoire de son interface de communication est disponible ou non pour recevoir des données. Si la valeur du registre de disponibilité est égale à 0, l'unité de routage informe l'unité de traitement réceptrice qu'une donnée lui est destinée, puis il autorise un transfert direct, via le bus de données, du paquet de données traité par l'unité de traitement émettrice vers l'unité de traitement réceptrice. Si la valeur du registre de disponibilité est égale à 1, l'unité de routage permet un transfert du paquet de données traité par l'unité de traitement émettrice vers la mémoire locale qui stocke temporairement ces données en attendant que la mémoire de l'interface de communication de l'unité de traitement réceptrice soit disponible. Le transfert de données s'effectue, par exemple selon le mécanisme de dépilage - empilage précédemment décrit.

Dans un mode de réalisation particulièrement avantageux, l'unité de routage comprend une table de communication programmable. Le fait d'utiliser une table de communication programmable permet de réaliser une architecture multi-applications apte à gérer différentes séquences de traitement de données indépendamment l'une de l'autre, chaque séquence de traitement implémentant des liens de communication différents entre différentes unités de traitements, des unités de traitement pouvant être communes à plusieurs séquences de traitement. La table de communication, programmée pour chaque application, autorise ainsi un fonctionnement flexible du dispositif de traitement de données selon l'invention avec la possibilité d'effectuer différents traitements de données tels que, par exemple, un codage, un décodage ou un transcodage de données vidéo selon différents standards tels que, par exemple, JPEG, MPEG-1, MPEG-2, MPEG-4, H-261, H-263.

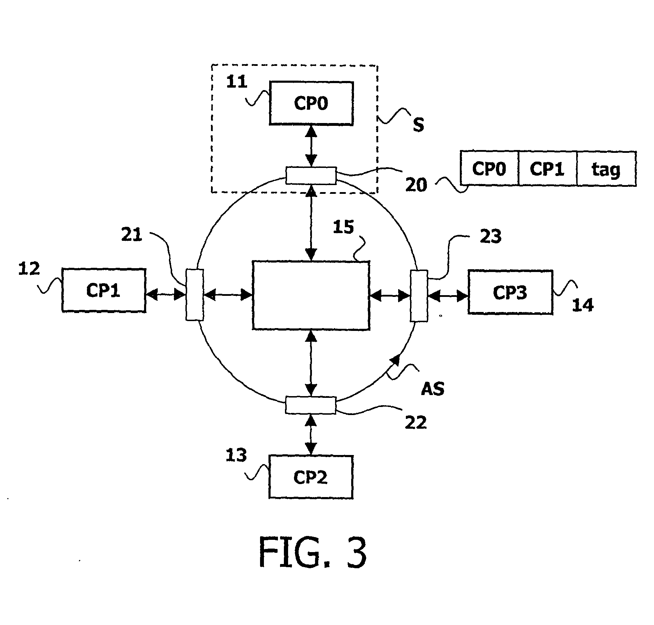

L'unité de routage (15) doit être apte à gérer des requêtes émanant de différentes unités de traitement. La Fig. 3 illustre la gestion par l'unité de routage d'un ensemble d'unités de traitement. Afin de gérer les différentes unités de traitement (CP0,CP1,CP2,CP3), l'unité de routage comporte des registres de communication (20 à 23) dédiés à chaque unité de traitement connectée à l'unité de routage par le bus de contrôle. Les registres de communication contiennent un second descripteur contenant l'adresse de l'unité de traitement émettrice (CP0), l'adresse de l'unité de traitement réceptrice (CP1) et la valeur du registre de disponibilité (tag) de l'unité de traitement réceptrice. L'unité de routage met en oeuvre un schéma d'accès (AS) caractérisé par plusieurs états (S) parcourus d'une façon prédéterminée, un état (S) constituant une possibilité de transfert des données d'une unité de traitement à une autre selon la valeur du registre de disponibilité. Le schéma d'accès obéit, par exemple, à un système d'arbitrage dit de tourniquet (en anglais 'Round Robin'), chaque unité de traitement disposant d'une tranche de temps pendant laquelle le transfert peut s'effectuer, puis c'est au transfert du suivant.

Ce système d'arbitrage assure les communications entre deux unités de traitement. Mais avant d'assurer une communication entre l'unité de traitement émettrice (CP0) et l'unité de traitement réceptrice (CP1), il reçoit une requête de l'unité de traitement émettrice et vérifie si l'unité de traitement réceptrice est prête à recevoir les données selon la valeur du registre de disponibilité. Quand l'unité de traitement réceptrice n'est pas disponible, l'unité de routage alloue le bus de données à l'unité de traitement émettrice afin que celle-ci transfère les données directement dans la mémoire locale. Ces données seront adressées ultérieurement à l'unité de traitement réceptrice. Dans le cas contraire, l'unité de routage alloue le bus de données pour une communication de données de l'unité de traitement émettrice vers l'unité de traitement réceptrice.

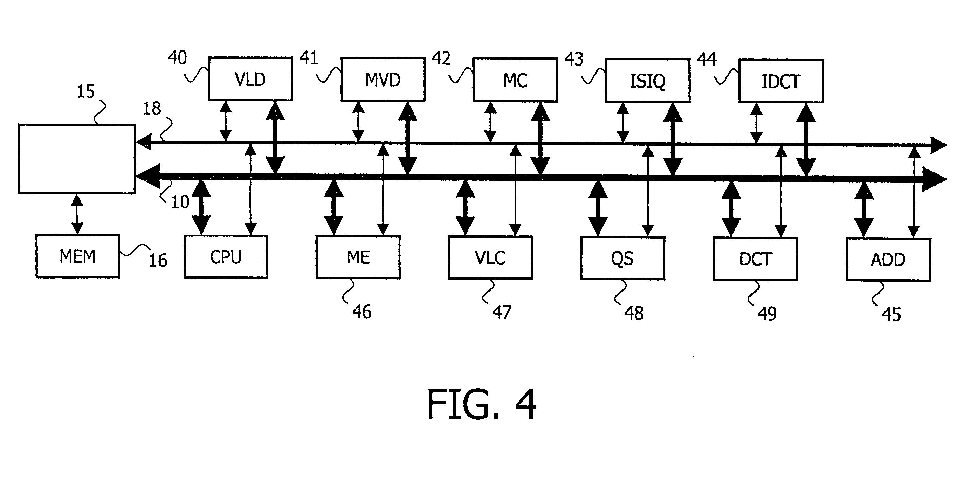

La Fig. 4 donne un exemple de mode de réalisation de l'architecture de traitement et d'acheminement de données dans le cas de données vidéo de type MPEG. L'architecture de traitement assure un codage et un décodage des données MPEG et comprend, outre une unité de routage (15), des bus de données (10) et de contrôle (18), une mémoire locale MEM (16) et une unité centrale de calcul CPU (17), les unités de traitement suivantes :
- une unité de décodage à longueur variable VLD (40),
- une unité de décodage des vecteurs de mouvement MVD (41),
- une unité de compensation de mouvement MC (42),
- une unité de balayage en zigzag inverse et de quantification inverse ISIQ (43),
- une unité de transformation en cosinus discrète inverse IDCT (44),
- une unité de reconstruction d'image ADD (45),
- une unité d'estimation de mouvement ME (46)
- une unité de codage à longueur variable VLC (47),
- une unité de quantification et de balayage en zigzag QS (48), et
- une unité de transformation en cosinus discrète DCT (49).

Dans le cas d'un décodage de données codées, par exemple, la table de communication est programmée comme suit :

| | |
|---|---|
| ID0 | VLD -> MVD |
| ID1 | MVD -> MC |
| ID2 | VLD -> ISIQ |
| ID3 | ISIQ -> IDCT |
| ID4 | IDCT -> ADD |
| ID5 | MC -> ADD |

Dans un autre exemple de transcodage simple de données sans compensation de mouvement, la table de communication est programmée comme suit :

| | |
|---|---|
| ID0 | VLD -> ISIQ |
| ID1 | ISIQ -> QS |
| ID2 | QS -> VLC |

Le transfert des données d'une unité de traitement à une autre et la gestion des différentes unités de traitement s'effectuent alors selon les principes décrits respectivement aux figures 2 et 3.

La description ci-dessus en référence aux Figures 1 à 4 illustre l'invention plutôt qu'elle ne la limite. Il est évident qu'il existe de nombreuses alternatives qui rentrent dans la portée des revendications ci-jointes. Il existe de nombreuses manières pour implémenter les fonctions décrites au moyen d'articles physiques (en anglais 'items of hardware'). A cet égard, la figure 4 est très schématique. Bien que cette figure montre différentes fonctions sous forme de blocs séparés, ceci n'exclut pas qu'un seul article physique effectue plusieurs fonctions. Ceci n'exclut pas non plus qu'une fonction puisse être effectuée par un ensemble d'articles physiques.

Aucun signe de référence entre parenthèses dans le présent texte ne doit être interprété de façon limitative. Le verbe "comprendre" et ses conjugaisons doit également être interprété de façon large, c'est à dire comme n'excluant pas la présence d'autres éléments que ceux listés après ledit verbe.

## Revendications

1. Dispositif de traitement de données comprenant
- un bus de données (10),
- une unité de routage (15) apte à gérer des communications sur le bus de données,
- au moins une unité de traitement apte à émettre des données (11) et au moins une unité de traitement apte à recevoir des données (12), et
- une mémoire locale (16) apte à stocker temporairement des données,
- l'unité de traitement réceptrice (12) de données étant apte à fournir un signal de disponibilité à l'unité de routage (15), et
ledit dispositif de traitement étant **caractérisé en ce que** :
- l'unité de routage est apte à autoriser un transfert, sur le bus de données (10), des données émises par l'unité de traitement émettrice (11) vers la mémoire locale (16) ou vers l'unité de traitement réceptrice (12) en fonction d'une valeur du signal de disponibilité.

2. Dispositif de traitement de données selon la revendication 1, **caractérisé en ce que** :
- l'unité de traitement émettrice (11) de données est apte à transmettre à l'unité de routage un identificateur, et
- l'unité de routage comprend une table de communication (151) programmable lui permettant de déterminer l'unité de traitement réceptrice (12) des données à partir de dudit identificateur.

3. Récepteur-décodeur de télévision comprenant un dispositif de traitement de données selon la revendication 1 ou 2, apte à effectuer des opérations de décodage et de transcodage à partir des unités de traitement suivantes :
- une unité de décodage à longueur variable VLD (40),
- une unité de balayage en zigzag inverse et de quantification inverse ISIQ (43),
- une unité de transformation en cosinus discrète inverse IDCT (44),
- une unité de quantification et de balayage en zigzag QS (48), et
- une unité de codage à longueur variable VLC (47).

4. Méthode de gestion de communications de données sur un bus de données (10) entre au moins une unité de traitement apte à émettre des données (11) et au moins une unité de traitement apte à recevoir des données (12), comprenant:
- une étape de délivrance d'un signal de disponibilité par l'unité de traitement réceptrice (12) de données, et
ladite méthode étant **caractérisée en ce qu'**elle comprend :
- une étape de transfert, sur le bus de données (10), des données émises par l'unité de traitement émettrice (11) , le transfert étant vers une mémoire locale (16) ou vers l'unité de traitement réceptrice (12) en fonction d'une valeur du signal de disponibilité.

## Claims

1. A data processing device comprising
- a data bus (10),
- a router (15) able to manage communications over the data bus,
- at least one processing unit able to transmit data (11) and at least one processing unit able to receive data (12), and
- a local memory (16) able to temporarily store data,
- the receiving data processing unit (12) able to deliver an availability signal to the router (15), and
said processing device being **characterized in that**:
- the router is able to authorize a transfer over the data bus (10) of the data transmitted by the transmitting processing unit (11) to the local memory (16) or to the receiving processing unit (12) as a function of a value of the availability signal.

2. A data processing device as claimed in claim 1, **characterized in that**:
- the transmitting data processing unit (11) is able to transmit an identifier to the router (15), and
- the router (15) comprises a programmable communication table (151) which enables it to determine the data receiving processing unit (12) based on said identifier.

3. A set top box comprising a data processing device as claimed in claim 1 or 2, able to perform decoding and transcoding from the use of a variable-length decoding processing unit (40), a zigzag inverse scanning and inverse quantification processing unit (43), an inverse discrete cosine transform processing unit (44), a zigzag quantification and scanning processing unit (41) and a variable length coding processing unit (47).

4. A method of managing data communications over a data bus (10) between at least one processing unit able to transmit data (11) and at least one processing unit able to receive data (12) comprising:
- a step of delivering an availability signal by the receiving data processing unit (2), and said method being **characterized in that** it comprises:
- a step of transferring over the data bus (10) data transmitted by the transmitting processing unit (11), the transfer being effected to a local memory (16) or to the receiving processing unit (12) as a function of a value of the availability signal.

## Patentansprüche

1. Vorrichtung zur Verarbeitung von Daten mit:
- einem Datenbus (10),
- einer Leitwegeinheit (15), dazu in der Lage, Kommunikationen über den Datenbus zu verwalten,
- mindestens einer Verarbeitungseinheit, dazu in der Lage, Daten zu senden (11), und mindestens einer Verarbeitungseinheit, dazu in der Lage, Daten zu empfangen (12), und
- einem lokalen Speicher (16), dazu in der Lage, Daten vorübergehend zu speichern,
- wobei die Empfangs-Verarbeitungseinheit (12) von Daten dazu in der Lage ist, der Leitwegeinheit (15) ein verfügbares Signal bereitzustellen, und
die besagte Vorrichtung zur Verarbeitung **dadurch gekennzeichnet ist, dass**:
- die Leitwegeinheit dazu in der Lage ist, unter Berücksichtigung eines Werts des Verfügbarkeitssignals einen Transfer der von der Sende-Verarbeitungseinheit (11) zum lokalen Speicher (16) oder zur Empfangs-Verarbeitungseinheit (12) gesendeten Daten über den Datenbus zu autorisieren.

2. Vorrichtung zur Verarbeitung von Daten nach Anspruch 1, **dadurch gekennzeichnet, dass**:
- die Sende-Verarbeitungseinheit (11) von Daten dazu in der Lage ist, einen Identifizierer, an die Leitwegeinheit zu übertragen, und
- die Leitwegeinheit eine programmierbare Kommunikationstabelle (151) enthält, die es ihr ausgehend vom besagten Identifizierer erlaubt, die Empfangs-Verarbeitungseinheit (12) der Daten zu bestimmen.

3. Fernseh-Empfänger-Decodierer mit einer Vorrichtung zur Verarbeitung von Daten nach Anspruch 1 oder 2, dazu in der Lage, Decodierungs- und Umcodierungsvorgänge ausgehend von folgenden Verarbeitungseinheiten auszuführen:
- einer Einheit zur Decodierung mit variabler Länge VLD (40),
- eine Einheit zur umgekehrten Zickzack-Abtastung und zur umgekehrten Quantifikation ISIQ (43),
- einer Einheit zur umgekehrten diskreten Kosinustransformation IDCT (44),
- einer Einheit zur Quantifikation und zur Zickzack-Abtastung QS (48), und
- einer Einheit zur Codierung mit variabler Länge VLC (47).

4. Methode zur Verwaltung von Datenkommunikationen an einem Datenbus (10) zwischen mindestens einer Verarbeitungseinheit, dazu in der Lage, Daten zu senden (11), und mindestens einer Verarbeitungseinheit, dazu in der Lage, Daten zu empfangen (12) mit:
- einem Schritt für die Abgabe eines Verfügbarkeitssignals von der Empfangs-Verarbeitungseinheit (12) von Daten, und
die besagte Methode **dadurch gekennzeichnet ist, dass** sie enthält:
- einen Schritt für den Transfer der von der Sende-Verarbeitungseinheit (11) über den Datenbus (10) gesendeten Daten, wobei der Transfer unter Berücksichtigung eines Werts des Verfügbarkeitssignals an einen lokalen Speicher (16) oder zur Empfangs-Verarbeitungseinheit (12) geht.
